**Europäisches Patentamt**

**European Patent Office**

**Office européen des brevets**

(19)

(11) Numéro de publication: **0 207 871**
**B1**

(12)

# FASCICULE DE BREVET EUROPEEN

(45) Date de publication du fascicule du brevet:
**19.09.90**

(51) Int. Cl.⁵: **B28D 1/30**, B23D 57/00

(21) Numéro de dépôt: **86450011.1**

(22) Date de dépôt: **23.05.86**

(54) **Scie à fil pour le moulurage de pierres, de granits et autres.**

(30) Priorité: **04.06.85 FR 8508512**

(43) Date de publication de la demande:
**07.01.87 Bulletin 87/2**

(45) Mention de la délivrance du brevet:
**19.09.90 Bulletin 90/38**

(84) Etats contractants désignés:
**AT BE CH DE FR GB IT LI LU NL SE**

(56) Documents cités:
**EP-A- 0 124 464**
**DE-A- 3 118 505**
**FR-A- 1 181 323**
**US-A- 2 803 239**
**US-A- 3 490 815**

(73) Titulaire: **Roujon, Auguste, 28 Place Frédéric Bompaire,**
**F-12100 Millau(FR)**

(72) Inventeur: **Roujon, Auguste, 28 Place Frédéric**
**Bompaire, F-12100 Millau(FR)**

(74) Mandataire: **Ravina, Bernard, Cabinet Bernard**
**RAVINA 24, boulevard Riquet, F-31000 Toulouse(FR)**

ACTORUM AG

## Description

La présente invention a pour objet une scie à fil pour le moulage de pierres, de granits et autres telle que décrite dans la demande de brevet FR-A 2 545 032 et dans la demande de brevet européen correspondante EP-A 00 124 464.

La scie à fil telle que décrite dans ces demandes est constituée par un châssis fixe vertical dans lequel se déplace en translation verticale un châssis mobile portant des poulies à fil et par un chariot porte-blocs mobile en translation horizontale sous le châssis fixe et comportant un panneau guide vertical dans lequel se déplace l'extrémité d'un bras guide solidaire du châssis mobile vertical.

Le sciage de la moulure est obtenu par la combinaison d'un mouvement vertical vers le bas du châssis mobile et d'un mouvement de translation horizontal du chariot porte-blocs.

La forme de la moulure désirée sur le bloc est donnée par le panneau guide solidaire du chariot porte-blocs dans lequel se déplace le bras guide du châssis mobile vertical.

La scie à fil telle que décrite dans la demande française FR-A 2 545 032 et la demande européenne EP-A 00 124 464 ci-dessus citées donne de bons résultats mais pour certaines formes de moulures quelques inconvénients sont apparus au cours du fonctionnement.

En effet, la commande pour le déplacement du chariot porte-blocs dans un sens ou dans l'autre est assurée par l'action d'un contrepoids et d'un système mécanique de démultiplication et d'entraînement. Le contrepoids a pour but d'assurer, par une charge appropriée, l'avance du chariot suivant la charge que le dit chariot transporte mais sans que cette avance pusse être réglée de façon précise.

Il faut en effet, une charge supérieure du contrepoids pour que le chariot puisse avancer lorsque l'extrémité du bras guide se trouve sur une partie à forte inclinaison du profil de la moulure ménagé dans le panneau guide; mais dans ce cas, la vitesse de déplacement augmente et devient trop importante lorsque l'inclinaison du profil du panneau guide se rapproche de l'horizontale.

D'autre part, le système d'entraînement du chariot porte-blocs par crémaillère provoque lors d'un changement du sens de translation du dit chariot un décrochement sur le profil du bloc à scier.

Ce décrochement est dû lors du changement de sens au jeu créé entre la crémaillère et son pignon.

Suivant un autre inconvénient de la scie à fil selon la demande Européenne, il s'est avéré que le rapprochement des poulies à fil près du bloc à scier n'était pas encore suffisant pour supprimer la flèche que subit le fil lors de la descente du chariot vertical.

Le brevet DE-A 3 118 505 propose des systèmes atinflèche comportant des poulies entre lesquelles passe le fil de sciage. La vitesse linéaire de ce fil est grande et provoque la rotation des poulies des systèmes antiflèche.

Ces poulies doivent être de faible diamètre afin que le maintien du fil soit au plus près du bloc à scier.

Ce faible diamètre et la vitresse du fil de sciage ont pour effet d'entraîner les poulies à une vitesse de rotation très élevée ce qui provoque la destruction du revêtement de leur gorge et par voie de conséquence le non maintien du fil de sciage.

Un autre inconvénient est également apparu lors du fonctionnement de la scie à fil, selon la demande de brevet-référencée au niveau du bras guide.

En effet, lors du déplacement du chariot porte-blocs, il se produit sur le bras guide un déplacement latéral de son extrémité dans le panneau guide ce qui peut provoquer le vrillage du bras guide et donc des défauts sur la forme de la moulure obtenue sur le bloc relativement au profil du panneau guide.

Les perfectionnements selon la présente invention obvient à ces inconvénients en permettant d'obtenir pour le chariot porte-blocs une vitesse maximale variable suivant les possibilités d'usure du matériau à scier en évitant la formation d'une flèche sur le fil lors du sciage et en éliminant tout déplacement latéral possible du bras guide dans le panneau guide.

A cet effet, la scie à fil pour le moulurage de pierres, de granits et autres selon l'invention comporte un châssis fixe vertical dans lequel se déplace en translation verticale un châssis mobile portant des poulies à fil et des systèmes antiflèche disposés entre les dites poulies à fil et le bloc à scier et un chariot porte-blocs mobile en translation horizontale sous le châssis fixe et comportant un panneau guide vertical dans lequel se déplace l'extrémité d'un bras guide solidaire du châssis mobile vertical, le chariot porte-blocs étant entraîné par des moyens mécaniques actionnés par un contrepoids et comportant un engrenage à vis, un tambour solidaire de l'arbre de la vis du dit engrenage à vis et sur lequel s'enroule un câble supportant le contrepoids, un dispositif d'entraînement du chariot fixé sur l'arbre de la couronne de l'engrenage à vis et un embrayage monté sur l'arbre de la dite couronne pour désolidariser le dispositif d'entraînement du chariot de l'engrenage à vis; la dite scie à fil se caractérise en ce que un système mécanique assurant une avance automatique du chariot porte-blocs à une vitesse pouvant être variable est couplé à l'arbre de la vis de l'engrenage à vis des moyens mécaniques d'entraînement du chariot porte-blocs actionnés par le contrepoids afin d'imposer au déplacement du dit chariot sans modifier le contrepoids une vitesse maximale en considérant les possibilités d'usure du matériau à scier et le profil à réaliser sur le bloc à scier défini par le panneau guide et que ce système mécanique d'avance automatique est constitué d'un moteur couplé à un réducteur dont l'arbre de sortie est coaxial à l'arbre de la vis de l'engrenage à vis, par un embrayage à patin dont une partie est montée coulissante sur l'arbre du réducteur et par un disque fixé sur l'arbre de la vis.

Suivant une autre caractéristique des perfectionnements selon l'invention, la scie à fil comporte des moyens de maintien et de guidage du bras guide afin d'éviter les déplacements latéraux de celui-ci dans le panneau guide.

D'autres avantages et caractéristiques apparaîtront à la lecture de la description ci-après illustrée par les dessins ci-annexés donnés à titre d'exemple non limitatif et en lesquels:

- les figures 1, 2 et 3 sont respectivement des vues de face, de côté et de dessus de la scie à fil pourvue des perfectionnements selon l'invention.

- Les figures 4 et 5 sont respectivement des vues de face et de côté d'un système anti-flèche suivant l'invention.

- Les figures 6 et 7 sont respectivement des vues de dessus et de face de l'autre système anti-flèche.

- Les figures 8 et 9 sont des vues côté et de dessus montrant le guidage du timon du chariot porte bloc.

- La figure 10 est une vue de dessus du moyen d'entraînement du chariot porte blocs.

- Les figures 11 et 12 sont respectivement des vues de côté et de dessus du dispositif pour réaliser des limons hélicoïdaux ou travaux similaires.

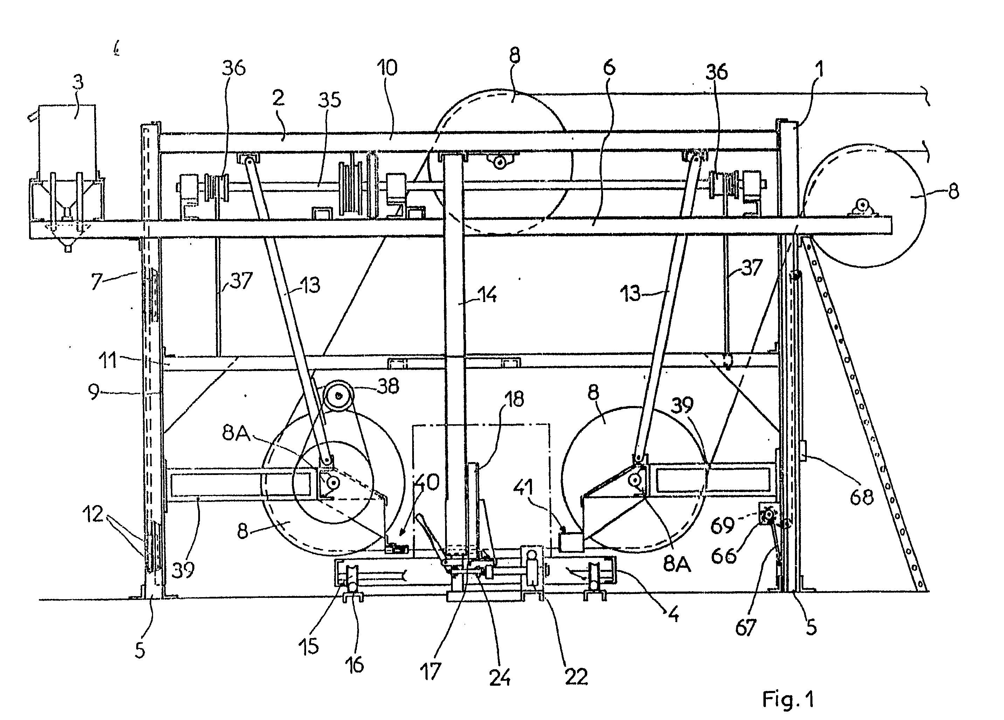

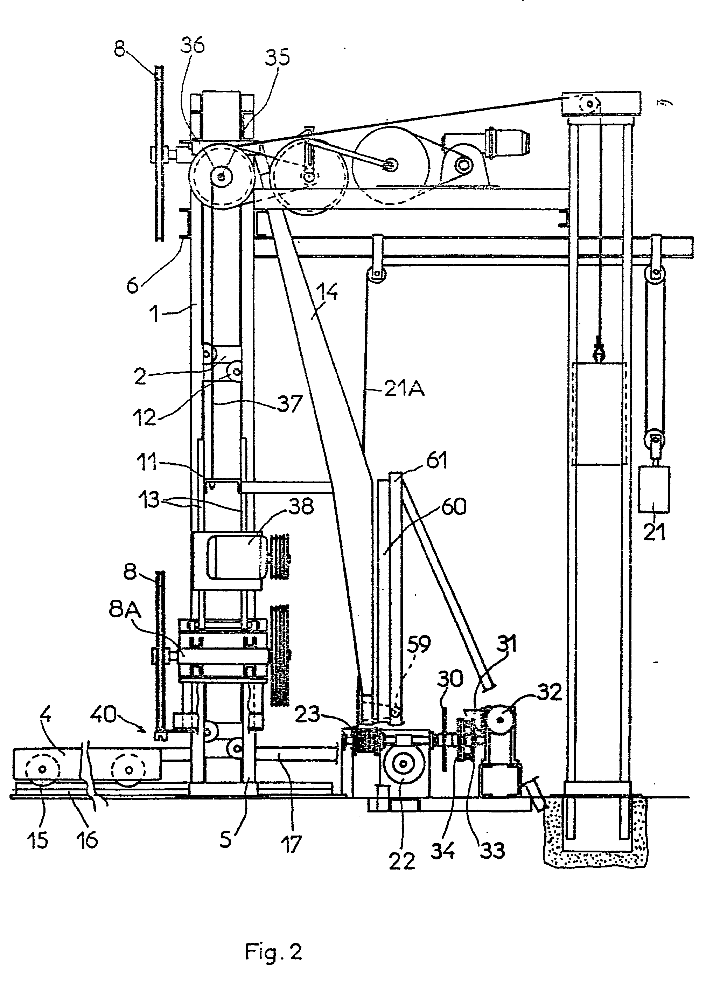

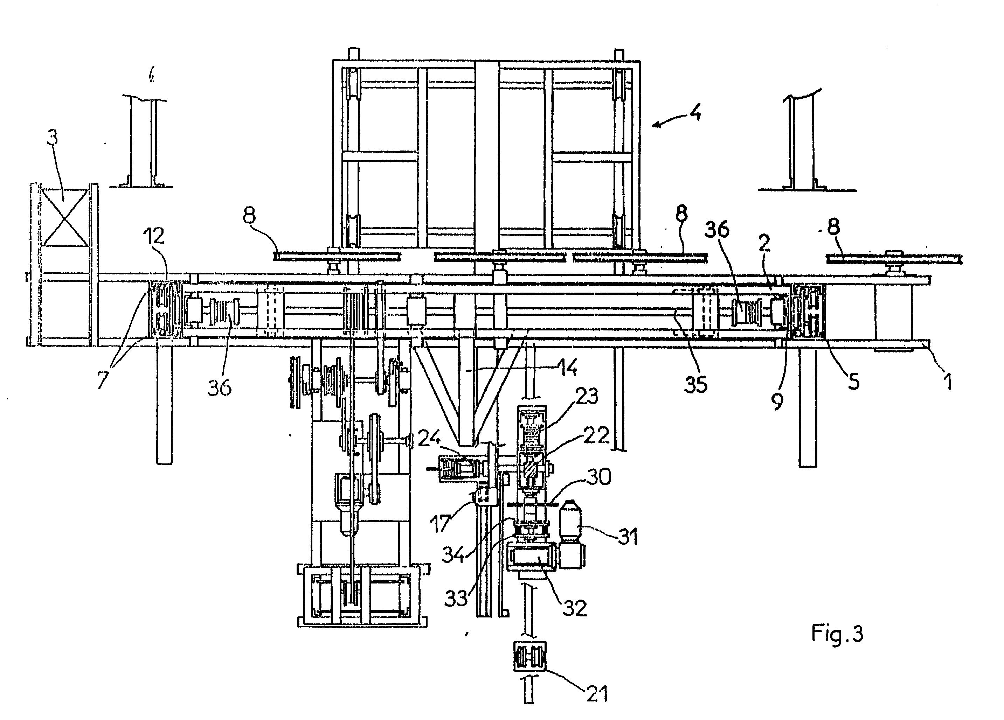

La scie à fil pour le moulurage de pierres, de granits et autres, objet des perfectionnements selon la présente invention et représentée aux figures 1, 2 et 3 comporte comme décrit dans les demandes de brevet Français FR-A 2 545 032 et Européen EP-A 00 124 464, un châssis fixe vertical 1, un châssis vertical 2 mobile en translation dans le dit châssis fixe, un dispositif tendeur de fil, une pompe et un appareil distributeur d'abrasif 3, un chariot horizontal porte blocs 4 mobile en translation sous le châssis mobile 2.

Le châssis fixe 1 est constitué par deux montants 5 verticaux parallèles reliés entre eux par une traverse 6 et dans lesquels sont fixées des glissières 7. Sur les extrémités de la traverse 6 est fixé d'une part, l'appareil distributeur d'abrasif 3 et d'autre part une poulie à fil 8.

Le châssis mobile 2 est constitué de deux poutres 9 parallèles solidaires entre elles par un longeron supérieur 10 et par un longeron intermédiaire 11.
Les poutres 9 comportent des galets 12 destinés à venir rouler sur les glissières 7 du châssis fixe 1.

Sur le longeron supérieur 10 sont fixés une poulie à fil 8, deux bras 13 articulés sur le dit longeron et portant chacun à leur extrémité une poulie à fil 8, et un bras guide 14 avantageusement étayé sur le longeron intermédiaire 11.
Entre les montants 5 du châssis fixe 1 est disposé le chariot porte blocs 4.
Le dit chariot porte blocs est doté de galets 15 roulant sur des glissières 16 fixées au sol et comporte un timon 17.
Sur le dit timon est fixé le panneau guide 18 tel que décrit dans les demandes de brevet Française et Européenne sus mentionnées.

Le panneau guide 18 comporte une ouverture 19 présentant le profil de la moulure à obtenir sur le bloc porté par le chariot 4 et dans laquelle est placée l'extrémité du bras guide 14 dotée d'un roulement 20.

Le sciage de la moulure est obtenue par la combinaison d'un mouvement vertical vers le bas du châssis mobile 2 et d'un mouvement de translation horizontal du chariot porte blocs 4.

La commande pour le déplacement du chariot porte blocs dans un sens ou dans l'autre est assurée par des moyens de préférence mécaniques actionnés par un contre poids 21.

Suivant un premier perfectionnement selon l'invention de la scie à fil pour le moulurage, le chariot porte blocs 4 est doté, pour son déplacement, des moyens mécaniques actionnés par le contrepoids 21 et d'un système mécanique d'avance automatique à vitesse pouvant être variable couplé aux dits moyens mécaniques afin d'imposer au déplacement du dit chariot une vitesse maximale suivant les possibilités d'usure du matériau à scier.

Tels que décrits dans les demandes de brevet Français FR-A 2 545 032 et Européen EP-A 00 124 464 les moyens mécaniques actionnés par le contrepoids 21 sont constitués par un engrenage à vis 22, un tambour 23 solidaire de l'arbre de la vis du dit engrenage à vis et sur lequel s'enroule le cable 21A supportant le contrepoids 21, par un dispositif d'entraînement du chariot 4 monté sur l'arbre de la couronne de l'engrenage à vis 22 et par un embrayage 24 monté sur l'arbre de la dite couronne pour désolidariser le dispositif d'entraînement du chariot de l'engrenage à vis.

Selon une forme préférentielle de réalisation le dispositif d'entraînement du chariot solidaire de l'arbre de la couronne de l'engrenage à vis est suivant un perfectionnement selon l'invention constitué par un tambour 25 monté sur roulements sur l'arbre de la dite couronne et par un câble 26 enroulé sur le tambour 25 et fixé par ses extrémités sur les extrémités du timon 17.

Dans une flasque du tambour 25 est ménagée une pluralité d'orifices 27 coopérant avec des ergots 28 montés sur un plateau 29 faisant partie de l'embrayage 24.

Avantageusement sur l'arbre de la vis de l'engrenage à vis 22 est monté un volant de manoeuvre 30 permettant l'enroulement du cable 21A du contrepoids 21 lorsque l'embrayage 24 est débrayé et permettant de placer les ergots 28 de l'embrayage 24 face aux orifices 27 du tambour 25 avant d'embrayer de nouveau.

Le débrayage de ce tambour 25 est indispensable pour déplacer rapidement le chariot ou éventuellement inverser l'enroulement du câble 21A sur le tambour 23 dans le cas de changement de direction de la translation du chariot porte blocs 4.

Le système mécanique d'avance automatique à vitesse pouvant être variable est couplé aux moyens mécaniques actionnés par contrepoids sur l'arbre de la vis de l'engrenage à vis 22.

Ce système mécanique d'avance est constitué selon une forme préférentielle par un moto réducteur 31 couplé à un réducteur 32 dont l'arbre de sortie est coaxial à l'arbre de la vis de l'engrenage à vis 22, par un embrayage à patin 33 dont une partie est montée coulissante sur l'arbre du réducteur 32 et par un disque 34 fixé sur l'arbre à vis.

La partie d'embrayage 33 placée sur l'arbre du réducteur 32 coulisse sur cet arbre et vient s'appuyer sur le disque 34 sous l'action de ressorts entraînant ainsi le chariot tant qu'aucun obstacle ne vient s'opposer à l'avance.

Dans le cas de résistance provoquée par la forme du panneau guide 18, le patin de l'embrayage 33 patine sur le disque 34 réalisant ainsi la vitesse différentielle à la demande du panneau guide 18.

Avantageusement les flasques du tambour 23 sont taillés en rochets pour au besoin bloquer le dit tambour à l'aide de cliquets et éviter ainsi tout déplacement dans un sens ou dans l'autre.

Les moyens mécaniques actionnés par le contrepoids 21 évitent une trop forte pression sur l'embrayage à patin 33 et facilite le démarrage de l'embrayage aprés un patinage prolongé.
L'ensemble des démultiplications du système d'avance automatique et des moyens mécaniques imprime au chariot porte blocs 4 une vitesse maximale de déplacement.

Dans le cas où, pour certains granits trés durs, la vitesse maximale serait trop forte ou insuffisante pour d'autres matériaux moins durs, un variateur de vitesse ( non représenté) peut être intercalé entre la sortie du réducteur 32 et l'embrayage à patin 33 afin selon le cas d'augmenter ou de diminuer la vitesse maximale.

Ainsi quelle que soit la forme du profil ménagé sur le panneau guide 18, le chariot porte blocs 4 avance à une vitesse maximale lorsque l'extrémité du bras guide se trouve sur une pente d'inclinaison inférieure à 45° et à une vitesse différentielle lorsqu'il se trouve sur une pente supérieure à 45°.

Il en est de même pour le châssis mobile 2 qui est doté d'un système de descente automatique permettant d'obtenir une vitesse de descente différentielle.

Les moyens utilisés dans ce système de descente automatique sont tels que ceux décrits dans la demande de brevet Européenne ci-dessus citée.
Cependant, suivant un autre perfectionnement selon l'invention, les arbres portant les moyens de ce système de descente automatique sont disposés parallèlement à l'arbre 35 monté sur le châssis fixe et en bout desquels sont fixés les tambours 36 sur lesquels s'enroulent des cables 37 dont les extrémités sont fixés sur le longeron intermédiaire 11 du châssis mobile 2.

De plus l'entraînement entre les divers moyens du système de descente n'est plus réalisé par des engrenages qui provoquaient des blocages, mais par des courroies ou des chaînes Galle tel que représenté aux figures 1, 2 et 3.

Sur le longeron supérieur sont articulés les bras 13 sur lesquels sont montées les poulies à fil 8 dans des blocs paliers 8A.
Sur un des bras 13 est fixé le moteur d'entraînement 38 du fil de sciage.

Comme décrit dans les demandes de brevet Française et Européenne les bras 13 sont destinés au rapprochement des poulies 8 du bloc à scier et à cet effet entre les poutres 9 du châssis mobile 2 et les blocs paliers 8A sont disposés des intercalaires téléscopiques 39.
Il s'est avéré que ce rapprochement des poulies 8 bien qu'efficace n'était pas suffisant.

Suivant donc un autre perfectionnement selon l'invention de la scie à fil pour mouluer, entre la poulie à fil 8 portée par le bras 13 et le bloc à scier sont disposés des systèmes anti-flêches 40 et 41 qui permettent de maintenir le fil en ligne lors du sciage.

Le système anti-flêche 40 disposé à l'entrée du fil de sciage dans le bloc à scier est de préférence différent de celui disposé à la sortie du fil du bloc pour des raisons qui seront expliquées plus avant.

Le système anti-flêche 40 disposé du côté de l'entrée du fil de sciage dans le bloc à scier est constitué d'une plaquette verticale 42 sous laquelle s'appuie le fil, de deux plaquettes latérales 43 symétriquement disposées à la plaquette 42 et perpendiculairement à celle-ci, d'un support de plaquettes 44 monté sur une platine 45 fixée sur une cornière 46 et d'une plaque 47 fixée sur le support du bloc palier 8A et sur laquelle est montée la cornière 46.

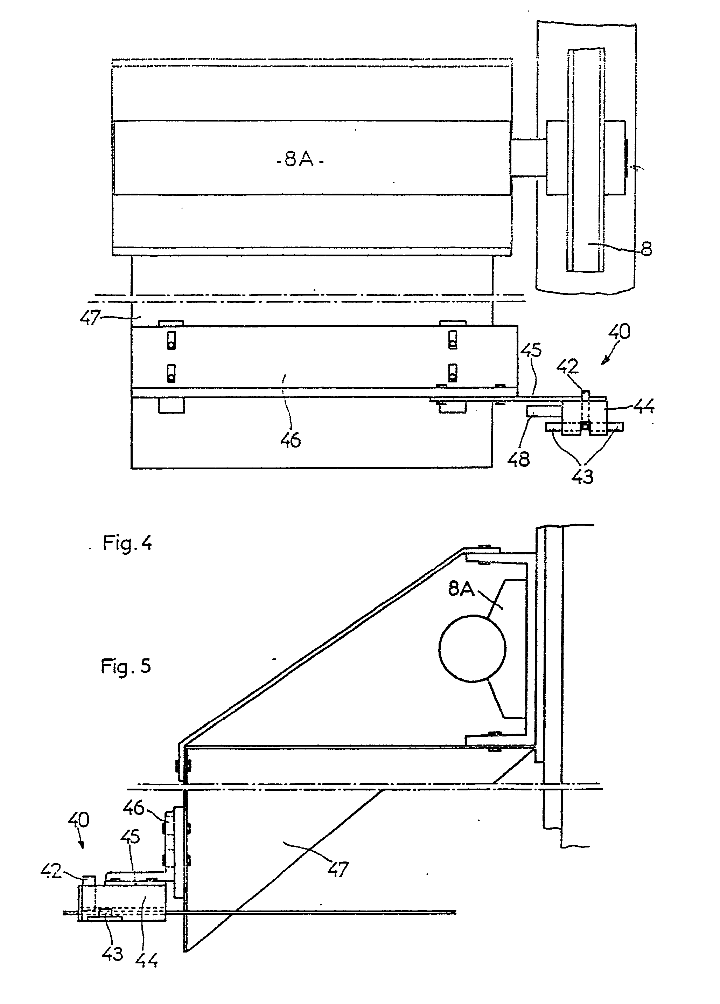

Comme représenté en figures 4 et 5, la dite cornière 46 peut être réglée en hauteur afin de régler la pression de la plaquette 42 sur le fil de sciage.
La platine 45 peut également être réglée suivant son sens longitudinal pour disposer les plaquettes 43 symétriquement au fil.

Aussi la plaquette verticale 42 évite le déplacement vers le haut du fil et donc évite toute flêche et les plaquettes 43 évitent tout déport latéral du fil pendant le sciage.
Avantageusement les plaquettes 42 et 43 sont en un métal à usure trés lente préférentiellement du tungstène.
De plus, une amenée d'eau 48 est nécessaire pour éviter l'échauffement des plaquettes.
On comprendra aisément que le support de plaquettes 44 doit être le plus prés possible du bloc à scier.

Toutefois si ce système anti-flêche 40 est efficace côté entrée du fil et sans grande conséquence pour l'usure des plaquettes, il est préférable de ne pas l'utiliser côté sortie du fil. En effet à la sortie du bloc à scier le fil entraîne avec lui une petite quantité d'abrasif qui provoque la formation d'un sillon sur la plaquette qui s'use plus rapidement.

Pour pallier à cet inconvénient un système anti-flêche 41 est disposé à la sortie du fil du bloc à scier entre le dit bloc et la poulie à fil 8.

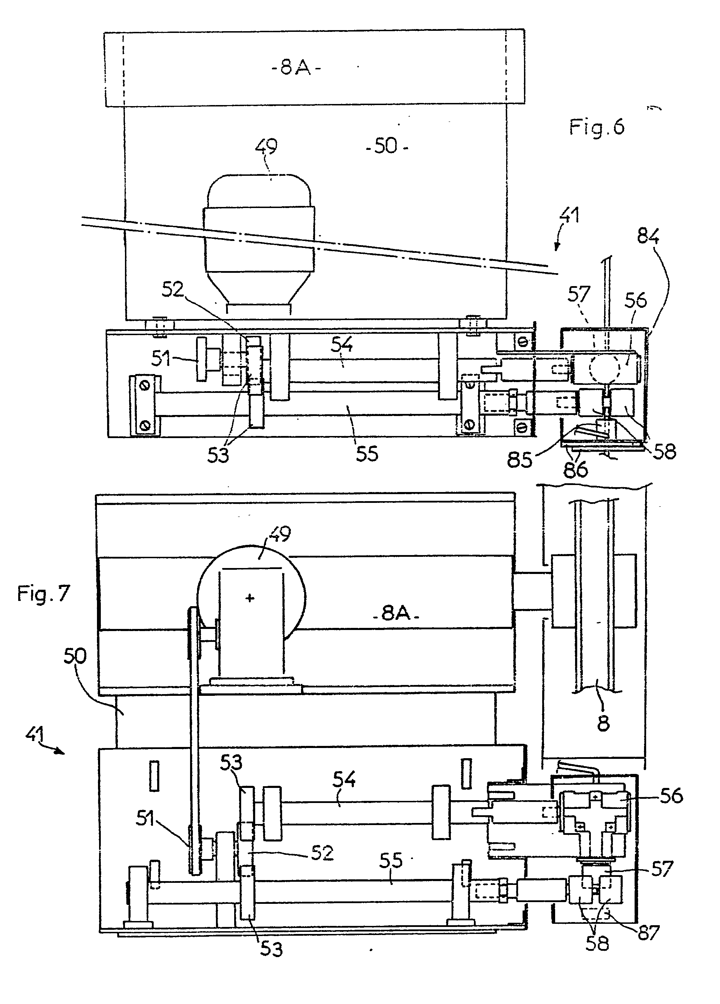

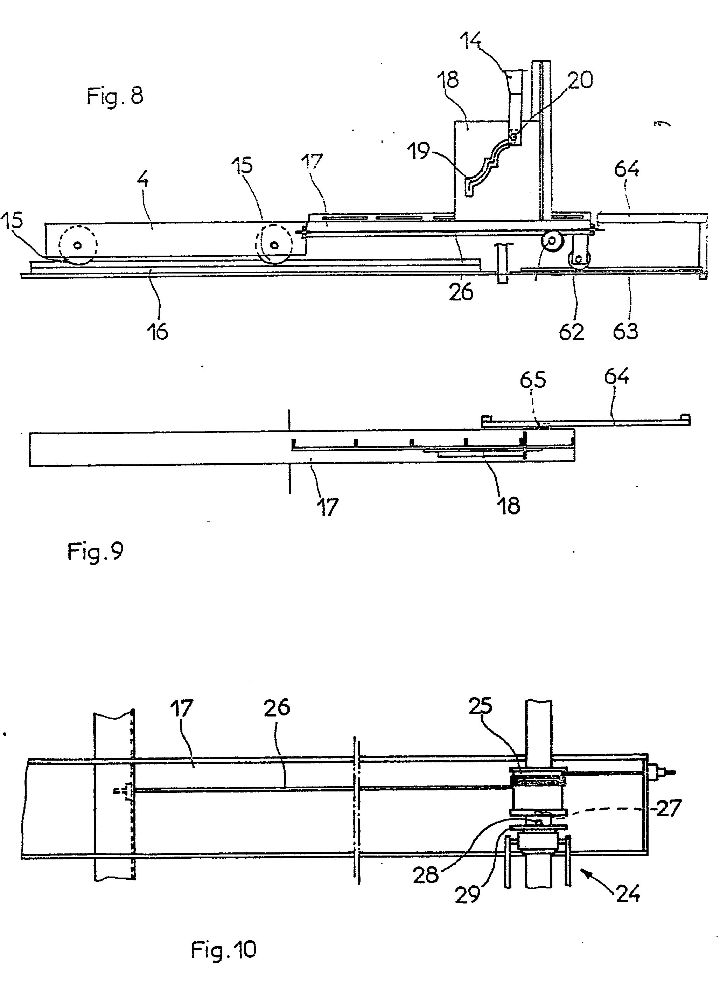

Ce système anti-flêche 41 est constitué tel que représenté en figures 6 et 7 par un moto réducteur 49 fixé sur un support 50 solidaire du support de bloc palier 8A entraînant en rotation une poulie 51, par une roue dentée 52 solidaire de l'arbre de la poulie 51, par deux autres roues dentées 53 engrenant avec la roue dentée 52, par deux arbres 54 et 55 portant chacun une roue dentée 53, par un renvoi d'angle 56 entrainé par l'arbre 54 et à la sortie duquel est fixée une couronne de tungstène 57 sous laquelle s'appuie le fil et par deux couronnes en tungstène 58 fixées en bout de l'arbre 55 entre lesquelles passe le fil.

Le dit fil s'appuie sur la partie plane de la couronne en tungstène 57 au même niveau que la partie inférieure de la poulie à fil 8.
L'entraînement en rotation des couronnes de tungstène 57 et 58 évite la formation d'un sillon sur les dites couronnes.
Avantageusement le système anti-flêche 41 comporte un réglage de la pression de la courronne 57 sur le fil et de la symétrie des couronnes 58 par rapport au dit fil.

De plus il est prévu également une amenée d'eau pour éviter l'échauffement des couronnes de tungstène.

Pour protéger les couronnes de tungstène 57 et 58 des projections d'abrasifs à la sortie du fil du bloc, sur le système anti-flèche 41 est disposé un carter de protection 84 des couronnes 57 et 58 qui porte sur sa partie avant et en dedans, un petit tube 85 à double paroi ( la paroi intérieure percée de petits trous) pour la projection de l'eau servant au lavage du fil et au refroidissement des couronnes.

Sur la partie avant du carter 84, mais à l'extérieur, sont placés deux volets 86 en caoutchouc se croisant sur le fil afin d'empêcher l'abrasif de pénétrer à l'intérieur du carter 84. Le système anti-flèche 40 peut comporter également côté entrée du fil un carter 84 muni de volets 86 caoutchouc.

Dans ce cas le but de ces derniers est d'empêcher l'eau servant au refroidissement du fil de venir, entraîné par le fil, laver l'entrée du bloc contrariant ainsi l'abrasion avec pour conséquences, retard du sciage et rupture du fil.

Par ailleurs, des essais ont permis d'effectuer des sciages en remontée. Il est probable que ce procédé sera peu employé mais il peut se trouver en certain cas trés utile.

Pour parvenir à ce résultat, une quatrième couronne de tungstène 87 peut être fixée pour la circonstance au dessous de la couronne 57 en laissant le passage du fil.

Pour procéder au sciage en remontée, il convient tout d'abord de débloquer complètement le patin d'embrayage de la descente automatique, ensuite de charger le contrepoids C de façon à donner un avantage à ce dernier par rapport au poids du châssis mobile 2.

Sur inclinaison de moins de 45° dans la forme du panneau guide 18, le roulement 20 sera poussé en remontée par le mouvement imprimé au chariot 4 entraînant ainsi le châssis mobile 2 en mouvement ascensionnel.

Il serait possible également de scier en remontée à plus de 45° mais cela entraînerait la fixation d'une roue à rochets (non représentée) couplée à la roue à rochets du système de descente avec dents inversées par rapport à cette dernière.

Bien entendu, ce sciage en remontée, de même qu'un sciage horizontal prolongé nécessite une disposition spéciale sur le bloc à scier, afin de maintenir l'abrasif dans le trait de scie.

Ainsi ces systèmes anti-flèche 40 et 41 maintiennent le fil bien en ligne entre les poulies 8 et permettent le réalisation de moulures de profil fidèle au profil du panneau guide 18.

Cette scie à fil peut également réaliser en série des limons hélicoidaux ou travaux de type similaire.

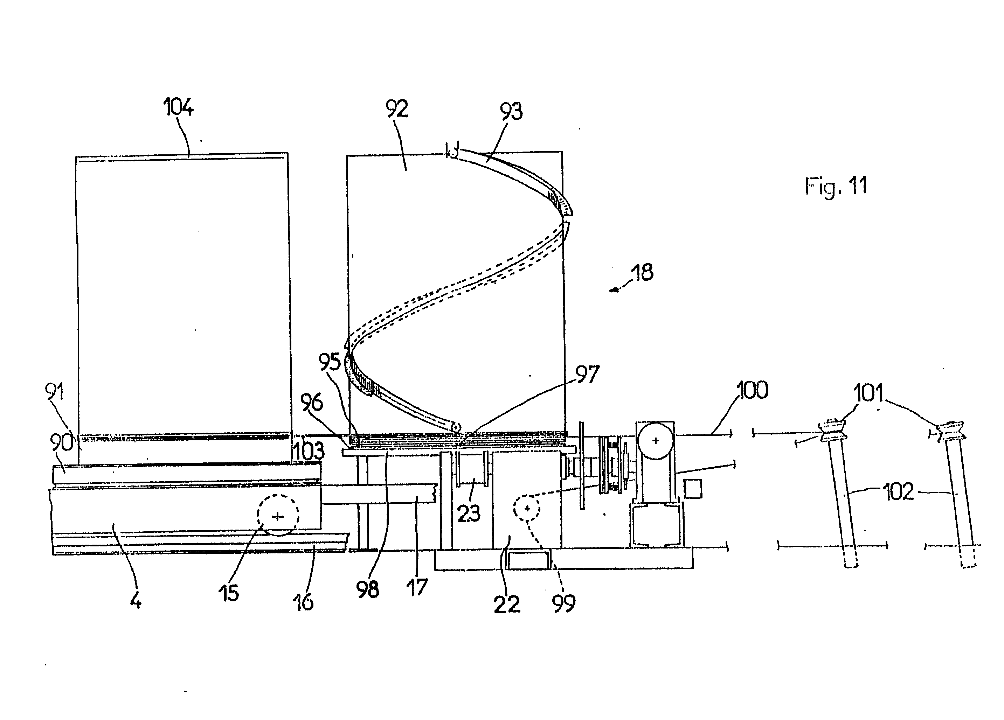

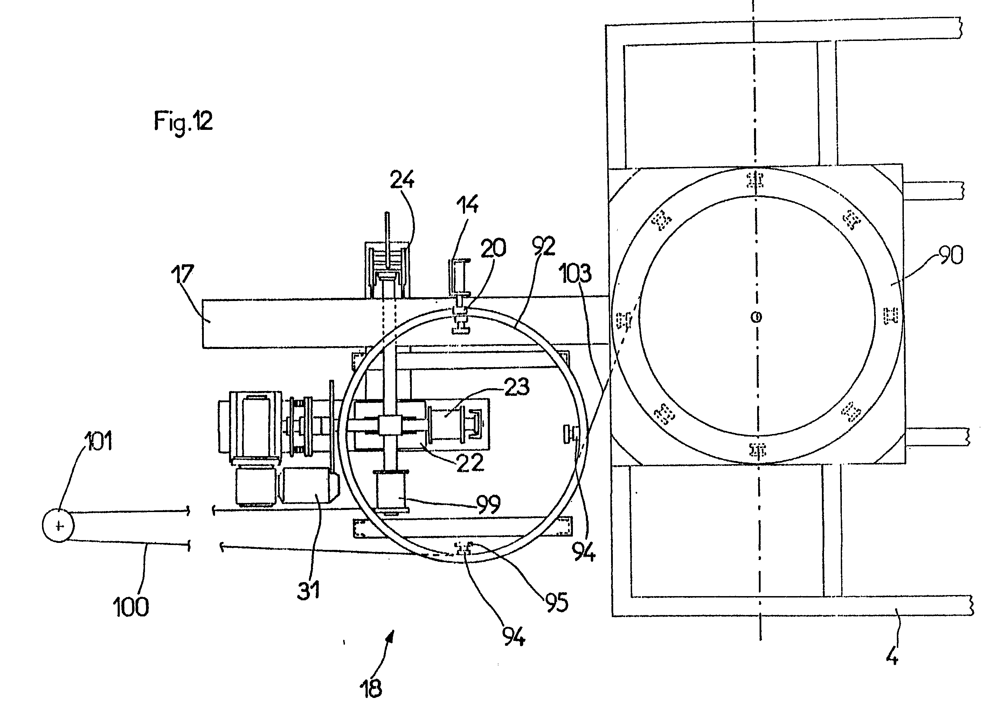

Pour ce faire un dispositif spécial est nécessaire tel que représenté en fig. 11 et 12.

Tout d'abord le chariot 4 doit être équipé d'une plaque 90 tournante de préférence amovible.

Sur cette plaque tournante 90 est placé le bloc à scier, auquel est préalablement donné une forme cylindrique par sciage au fil. Le bloc est posé sur une pièce de bois 91 de même diamètre et est bien centré sur la plaque tournante 90.

Cette pièce de bois 91 présente une épaisseur permettant à la base du bloc de se trouber à la même hauteur que la fin de la course du roulement dans le chemin de roulement 93 d'un cylindre guide 92 remplaçant dans ce cas le panneau guide 18.

Ce cylindre-guide 92 est d'un diamètre égal à celui du bloc. Il comprend un chemin de roulement 93 préparé à la forme de l'hélicoide que l'on veut obtenir.

Ce chemin de roulement 93 est constitué de préférence de lamelles fixées sur le cylindre-guide 92 par tout moyen connu par exemple par soudure.

A l'intérieur et à la base du dit cylindre-guide sont soudés des paliers 94 portant des roulements 95 devant circuler sur une plate-forme 96 métallique horizontale et fixe d'un diamètre pouvant être légèrement supérieur à celui du cylindre-guide.

Ce dernier est entraîné en rotation autour d'un axe 97 fixé au centre de la plate-forme 96.

Cet ensemble est placé sur un support 98 de façon à se trouver légèrement au dessus du carter de l'engrenage à vi 22.

Le système d'entraînement du chariot 4 sert pour l'entraînement en rotation du cylindre-guide 92. L'embrayage 24 doit être débrayé de façon à ne pas entraîner la translation du chariot; ce dernier doit rester fixe.

Le tambour 23 est neutralisé par le retrait du câble 49 le reliant au contrepoids 21. Un tambour 99 est fixé sur l'arbre de la couronne de l'engrenage à vis 22.

L'entraînement en rotation du cylindre-guide 92 se fait par un câble 100 enroulé sur deux ou trois tours autour de la partie inférieure du dit cylindre-guide, et relié au tambour 99 en passant par une poulie 101 pivotant sur l'extrémité d'un arbre 102 fixé au sol. Un deuxième câble 103 relie le cylindre-guide 25 à la pièce de bois portant le bloc sur deux ou trois tours d'enroulement.

Le moteur 31 étant mis en fonctionnement le câble 100 s'enroule autour du tambour 99 entraînant en rotation le cylindre-guide 92 qui entraîne à son tour en rotation la plaque tournante 90 porteuse du bloc à scier. La descente automatique est elle aussi mise en fonctionnement.

Ainsi les deux mouvements, rotation du cylindre et descente automatique, assurent, après engagement du roulement 20 placé à la partie inférieure de bras-guide 14 dans le chemin de roulement 93 du cylindre-guide 92, le sciage du bloc suivant la forme donnée à ce chemin de roulement.

L'engagement du fil dans le bloc doit se faire à la verticale. Il est donc nécessaire de descendre les premiers centimètres de sciage en sens vertical, après quoi le sciage sur partie inclinée est entrepris.

Une plaque 104 de pierre ou de granit peut être collée sur la partie supérieure du bloc pour réaliser cette opération. Les parties issues après sciage sont ensuite décollées.

En disposant sur la plaque tournante 90 des blocs à scier cylindriques et concentriques il est possible d'obtenir plus de deux limons hélicoidaux.

Cependant des défauts peuvent apparaître sur la moulure obtenue par sciage en raison du fait que l'extrémité inférieure du bras guide 14 peut subir des déplacements latéraux dans le panneau guide 18 dûs à la poussée du système de translation du chariot porte blocs 4.

Afin d'éviter cet inconvénient et suivant un perfectionnement selon l'invention, la scie à fil comporte un roulement 59 fixé sur la partie arrière du bras guide 14 et sur la face arrière de celui-ci et un butoir 60 vertical fixé dans le sol en arrière du bras guide 14, solidement étayé et sur le montant duquel est fixé un guide 61 dans lequel peut circuler le roulement 59 du dit bras guide.

Tout déplacement latéral du bras guide est ainsi éliminé.

D'autre part et suivant un autre perfectionnement selon l'invention afin de parer à une flexion possible du timon 17 sous la poussée du bras guide 14 en descente automatique, une roue 62 est fixée sous le timon et vient prendre appui et circule sur un rail

De même il est indispensable d'assurer la bonne tenue du timon en sens vertical car celui-ci peut se relever suivant la pression exercée par le système de déplacement du chariot porte blocs 4 et la position de l'extrémité du bras guide 14 dans le panneau guide 18.

Afin d'éliminer cet inconvénient un guide 64 horizontal est fixé dans le sol parallèlement au timon 17 et un roulement 65 est fixe sur l'aile du timon 17 et est destiné à venir s'appuyer et rouler sur la partie inférieure du guide 64.

Suivant un autre perfectionnement selon l'invention de la scie à fil des demandes de brevets Française et Européenne ci-dessus référencées, sur au moins un montant 5 du châssis fixe 1 dans lesquels sont ménagées les glissières 7 est monté un dispositif de protection des dites glissières protégeant ces dernières des projections d'abrasif en cours de sciage.

Ce dispositif de protection est constitué par un rouleau 66, par une bande protectrice 67 de la largeur du montant 5, par un ressort 69 et par un contrepoids 68.

L'enrouleur 66 est fixé sous l'emplacement du bloc palier 8A ou de l'intercalaire 39 et sur la poutre 9 du châssis mobile 2.

La bande protectrice 67 est fixée sur l'extrémité inférieure d'un montant 5 du châssis fixe 1.

Cette bande 67 se déroule au fur et à mesure de la montée du châssis mobile 2 et s'enroule au cours de la descente du dit châssis mobile à l'aide du ressort 69 et du contrepoids 68. Préférentiellement ce dispositif de protection est fixé sur le montant 5 du châssis fixe 1 disposé du côté de la sortie du fil du bloc à scier, c'est-à-dire du côté où les projections d'abrasifs ont lieu.

Mais il va de soi que le dit dispositif peut être fixé des deux côtés du châssis fixe 1.

Les perfectionnements selon la présente invention de la scie à fil object des demandes de brevet Française n° 83 05479 et Européenne n° 84 450012.4 permettent d'obtenir une trés grande précision dans la forme des moulures avec un abaissement du prix de revient des dites moulures en raison de la grande capacité de production.

Il va de soi que la présente invention peut recevoir tous aménagements et toutes variantes dans le domaine des équivalents techniques sans pour autant sortir du cadre du présent brevet, la protection étant déterminée par la teneur des revendications.

## Revendications

1. Scie à fil pour le moulurage de pierres, de granits et autres comportant un châssis fixe (1) vertical dans lequel se déplace en translation verticale un châssis mobile (2) portant des poulies à fil (8) et des systèmes antiflèche (40) et (41) disposés entre les dites poulies à fil et le bloc à scier et un chariot porte-blocs (4) mobile en translation horizontale sous le châssis fixe (1) et comportant un panneau guide (18) vertical dans lequel se déplace l'extrémité d'un bras guide (14) solidaire du châssis mobile vertical (2), le chariot porte-blocs (4) étant entraîné par des moyens mécaniques actionnés par un contrepoids (21) et comportant un engrenage à vis (22), un tambour (23) solidaire de l'arbre de la vis du dit engrenage à vis et sur lequel s'enroule un câble (21A) supportant le contrepoids (21), un dispositif d'entraînement du chariot (4) fixé sur l'arbre de la couronne de l'engrenage à vis (22) et un embrayage (24) monté sur l'arbre de la dite couronne pour désolidariser le dispositif d'entraînement du chariot (4) de l'engrenage à vis (22); scie à fil caractérisée en ce que un système mécanique assurant une avance automatique du chariot porte-blocs (4) à une vitesse pouvant être variable est couplé à l'arbre de la vis de l'engrenage à vis (22) des moyens mécaniques d'entraînement du chariot porte-blocs (4) actionnés par le contrepoids (21) afin d'imposer au déplacement du dit chariot, sans modifier le contrepoids (21), une vitesse maximale en considérant les possibilités d'usure du matériau à scier et le profil à réaliser sur le bloc à scier défini par le panneau guide (18) et que ce système mécanique d'avance automatique est constitué d'un moteur (31) couplé à un réducteur (32) dont l'arbre de sortie est coaxial à l'arbre de la vis de l'engrenage à vis (22), par un embrayage à patin (33) dont une partie est montée coulissante sur l'arbre du réducteur (32) et par un disque (34) fixé sur l'arbre de la vis.

2. Scie à fil selon la revendication 1, caractérisée en ce que le dispositif d'entraînement du chariot (4) est constitué par un tambour (25) monté sur roulement sur l'arbre de la couronne de l'engrenage à vis (22) et coopérant avec l'embrayage (24) et par un câble (26) enroulé sur le tambour (25) et fixé par ses extrémités sur les extrémités du timon (17).

3. Scie à fil selon la revendication 1, caractérisée en ce que le système antiflèche (40) disposé du côté de l'entrée du fil de sciage dans le bloc à scier est constitué d'une plaquette verticale (42) sous laquelle s'appuie le fil, de deux plaquettes latérales (43) symétriquement disposées à la plaquette (42) et perpendiculairement à celle-ci, d'un support de plaquettes (44) monté sur une platine (45) fixée sur une cornière (46) et d'une plaque (47) fixée sur le support du bloc palier (8A) et sur laquelle est montée la cornière (46).

4. Scie à fil selon la revendication 3, caractérisée en ce que la cornière (46) est réglable en hauteur et la platine (45) est réglable suivant son sens longitudinal afin d'une part de régler la pression de la plaquette (42) sur le fil de sciage et d'autre part de disposer les plaquettes (43) symétriquement au dit fil.

5. Scie à fil selon la revendication 1, caractérisée en ce que le système antiflèche (41) côté sortie du fil du bloc est constitué par un moteur (49) fixé sur un support (50) solidaire du bloc palier (8A) entraînant en rotation une poulie (51), par une roue dentée (52) solidaire de l'arbre de la poulie (51), par deux autres roues dentées (53) engrenant avec la roue dentée (52) et entraînant chacune un arbre (54) et (55), par un renvoi d'angle (56) entraîné en rotation par l'arbre (54) et à la sortie duquel est fixé une couronne (57) sous laquelle s'appuie le fil et par deux couronnes (58) fixées en bout de l'arbre (55) et entre lesquelles passe le fil.

6. Scie à fil selon les revendications 1, 3 et 5, caractérisée en ce que les systèmes antiflèche (40) et (41) sont disposés dans des carters de protection (84) contenant un tube de lavage (85) et portant des volets (86) se croisant sur le fil afin, du côté de l'entrée du fil dans le bloc, d'empêcher l'eau entraînée par le dit fil de laver l'entrée du dit bloc et, du côté sortie du fil du bloc, d'éviter à l'abrasif d'entrer à l'intérieur du carter.

7. Scie à fil selon les revendications 1, 3 et 5, caractérisée en ce que les plaquettes (42) et (43) et les couronnes (57) et (58) sont en tungstène.

8. Scie à fil selon la revendication 1, caractérisée en ce que la scie à fil comporte des moyens de maintien et de guidage du bras guide (14) afin d'éviter les déplacements latéraux de celui-ci dans le panneau guide (18).

9. Scie à fil selon la revendication 8, caractérisée en ce que les moyens de guidage et de maintien du bras guide (14) sont constitués par un roulement (59) fixé sur la partie inférieure du dit bras guide et sur la face arrière de celui-ci et par un butoir (60) vertical fixé dans le sol en arrière du bras guide (14) et sur le montant duquel est fixé un guide (61) dans lequel peut circuler le roulement (59).

10. Scie à fil selon la revendication 1, caractérisée en ce que sous le timon (17) est fixée une roue (62) venant prendre appui et circulant sur un rail (63) afin de parer à une flexion possible du timon (17) sous la poussée du bras guide (14).

11. Scie à fil selon la revendication 1, caractérisée en ce que un guide (64) horizontal est fixé dans le sol parallèlement au timon (17) et un roulement (65) est fixé sur l'aile du timon (17) et vient s'appuyer et rouler sur la partie inférieure du guide (64) afin d'éviter le relèvement du timon (17) lors de son déplacement.

12. Scie à fil selon la revendication 1, caractérisée en ce que sur au moins un des montants (5) du châssis fixe (1) dans lesquels sont ménagées les glissières (7) est monté un dispositif de protection des dites glissières protégeant ces dernières des projections d'abrasif en cours de sciage.

13. Scie à fil selon la revendication 12, caractérisée en ce que le dispositif de protection est constitué par un enrouleur (66) fixé sur le châssis mobile (2), par une bande protectrice (67) de la largeur du montant (5) et fixée par une de ses extrémités sur l'extrémité inférieure du montant (5), par un ressort (69) et par un contrepoids (68).

**Claims**

1. A wire saw for the cutting or moulding of stones, granite and others, comprising a fixed vertical frame (1) in which there is moved in vertical translation a movable frame (2) carrying wire pulleys (8) and antideflection systems (40) and (41) placed between the said wire pulleys and the block to be sawn and a block carriage (4) movable in horizontal translation under the fixed frame (1) and comprising a vertical guide panel (18) wherein is displaced the extremity of a guiding arm (14) integral with the movable vertical frame (2), the block carriage (4) being driven by mechanical means actuated by a counterweight (21) and comprising a worm gear (22), a drum (23) integral with the shaft of the worm of the said worm gear and on which is wound a cable (21A) supporting the counterweight (21), a driving device for the carriage (4) secured on the shaft of the crown wheel of the worm gear (22) and a clutch (24) mounted on the shaft of the said crown wheel to disengage the driving device of the carriage (4) from the worm gear (22); the wire saw being characterised in that a mechanical system providing an automatic feed of the block carriage (4) at a speed which may be variable is coupled to the shaft of the worm of the worm gear (22) of the mechanical driving means of the block carriage (4) actuated by the counterweight (21) to impart to the displacement of the said carriage - without modification of the counterweight (21) - a maximum speed commensurate with the wearing properties of the material to be saw and the outline to be produced on the block to be sawn, defined by the guide panel (18), and in that this mechanical automatic feed system is constituted by a motor (31) coupled to a reduction gear (32) of which the output shaft is coaxial with the shaft of the worm of the worm gear (22), by means of a slide coupling (33) of which a part is slidably installed on the shaft of the reduction gear (32) and a plate (34) secured on the shaft of the worm.

2. A wire saw according to claim 1, characterised in that the driving device of the carriage (4) is formed by a drum (25) mounted _via_ rolling bearings on the shaft of the crown wheel of the worm gear (22) and co-operating with the clutch (24) and by a cable (26) wound on the drum (25) and secured _via_ its ends to the ends of the beam (17).

3. A wire saw according to claim 1, characterised in that the anti-deflection system (40) situated on the side of entry of the sawing wire into the block to be sawn is formed by a vertical slab (42) on the underneath of which the wire bears by two lateral slabs (43) arranged symmetrically with respect to the slab (42) and at right angles to the latter, a slab support (44) mounted on a plate (45) secured on an angle bracket and by a plate (47) fastened on the support of the support block (8A) and on which the angle bracket (46) is mounted.

4. A wire saw according to claim 3, characterised in that the bracket (46) is adjustable in height and the plate (45) is adjustable in its longitudinal direction so as on the one hand to control the pressure of the slab (42) on the sawing wire and on the other hand to position the slabs (43) symmetrically with respect to the said wire.

5. A wire saw according to claim 1, characterised in that the anti-deflection system (41) on the side of wire exit from the block is formed by a motor (49), secured on a support (50) integral with the support block (8A) driving a pulley (51) in rotation <u>via</u> a gear wheel (52) integral with the shaft of the pulley (51), and <u>via</u> two other gear wheels (53) meshing with the gear wheel (52) and each driving a shaft (54) and (55) <u>via</u> an angle drive (56) driven in rotation by the shaft (54) and to the output of which is secured a crown wheel (57) on the underneath of which bears the wire and <u>via</u> two crown wheels (58) secured on the end of the shaft (55) and between which the wire passes.

6. A wire saw according to claims 1, 3 and 5 characterised in that the anti-deflection systems (40) and (41) are arranged within protective casings (84) containing a flushing tube (85) and carrying flaps (86) intersecting on the wire so that on the side of entry of the wire into the block the water entrained by the said wire may be prevented from entering the said block and on the side of the exit of the wire from the block the abrasive may be prevented from entering the inside of the casing.

7. A wire saw according to claims 1, 3 and 5 characterised in that the slabs (42) and (43) and the crown wheels (57) and (58) are of tungsten.

8. A wire saw according to claim 1, characterised in that the wire saw comprises means for supporting and guiding the guide arm (14) to prevent lateral displacements of the latter within the guide panel (18).

9. A wire saw according to claim 8, characterised in that the means for guiding and supporting the guide arm (14) are formed by a rolling bearing (59) secured on the lower part of the said guide arm and on the rear surface of the latter and by a vertical buffer (60) secured in the ground behind the guide arm (14) and on the upright of which is secured a guide (61) wherein the rolling bearing (59) may run.

10. A wire saw according to claim 1, characterised in that under the beam (17) is secured a wheel (62) bearing against and running on a rail (63) to prevent possible flexing of the beam (17) under the thrust of the guiding arm (14).

11. A wire saw according to claim 1, characterised in that a horizontal guide (64) is secured in the ground parallel to the beam (17) and a roller bearing (65) is secured on the flange of the beam (17) and bears against and runs on the lower part of the guide (64) to prevent lifting of the beam (17) during its displacement.

12. A wire saw according to claim 1, characterised in that on at least one of the uprights (5) of the fixed frame (1), wherein are formed the slides (7), there is installed a device for protection of the said slides, protecting these latter from jets of abrasive during sawing.

13. A wire saw according to claim 12, characterised in that the protective device is constituted by a winder (66) secured on the movable frame (2), by a protective band (67) having the width of the upright (5) and secured by one of its ends to the lower end of the upright (5) by means of a spring (69) and a counterweight (68).

**Patentansprüche**

1. Drahtsäge zum Sicken von Stein-, Granitblöcken und dgl. bestehend aus einem ortsfesten senkrechten Gestell (1), in welchem ein Drahtrollen (8) sowie zwischen besagten Drahtrollen und dem gesickten Steinblock angeordnete durchbiegungsverhindernde Aussteifvorrichtungen (40) bzw. (41) tragendes Fahrgestell (2) senkrecht verfahrbar ist, und einem waagrecht unterhalb des ortsfesten Gestelles (1) verfahrbaren Blockträgerschlitten (4), der eine senkrechte Führungsplatte (18) umfaßt, in welcher der Endbereich eines fest mit dem senkrecht verfahrbaren Gestell (2) verbundenen Führungsarmes (14) beweglich verstellbar ist, wobei der Blockträgerschlitten (4) von durch ein Gegengewicht (21) betätigten mechanischen Mitteln angetrieben wird, welche ein Schneckenradgetriebe (22), eine drehfest mit der Schneckenwelle dieses Schneckenradgetriebes verbundene Trommel (23), um welche ein das Gegengewicht (21) aufnehmendes Seil (21A) aufgewickelt ist, eine auf der Welle des Kranzes des Schneckenradgetriebes (22) befestigte Schlittenmitnahmevorrichtung des Schlittens (4) und eine auf der Welle des besagten Kranzes zur kinematischen Trennung der Mitnahmevorrichtung des Schlittens (4) und des Schneckenradgetriebes (22) angeordnete Kupplung (24) umfassen, welche Drahtsäge dadurch gekennzeichnet ist, daß eine mechanische, für einen automatischen Vorschub des Blockträgerschlittens (4) mit einer regelbar vorgesehenen Vorschubgeschwindigkeit sorgende Vorrichtung an die Welle des Schneckenradgetriebes (22) der durch das Gegengewicht (21) betätigten mechanischen Mitnahmemitteln des Blockträgerschlittens (4) derart ausgekuppelt wird, damit, ohne das Gegengewicht (21) verändern zu müssen, der Ortsverlagerung besagten Schlittens unter Berücksichtigung der Abriebmöglichkeiten des zu sägenden Werkstoffes und der am zu sägenden Materialblock auszubildenden und durch die Führungsplatte (18) vorbestimmten Profilierung die höchstmögliche Verfahrensgeschwindigkeit vorgegeben wird, und daß vorgenannte mechanische Vorrichtung für den automatischen Vorschub aus einem Motor (31) besteht, der mit einem Untersetzungsgetriebe (32), dessen Getriebeabtriebwelle achsengleich mit der Schneckenwelle des Schneckenradgetriebes (22) angeordnet ist, über eine Reibschuhkupplung (33), deren eine Teil gleitbar auf der Welle des Untersetzungsgetriebes (32) gelagert ist, und über eine auf der Schneckenwelle befestigten Scheibe (34) gekoppelt ist.

2. Drahtsäge nach Anspruch 1, dadurch gekennzeichnet, daß die Mitnahmevorrichtung des Schlittens (4) aus einer über Wälzlager auf der Kranzwelle des Schneckenradgetriebes (22) drehbar angeordneten und mit der Kupplung (24) zusammenwirkenden Trommel (25) und einem auf dieser Trommel (25) aufgewickelten und mit seinen Endbereichen an den Endbereichen der Zugstange (17) befestigten Kabel (26) besteht.

3. Drahtsäge nach Anspruch 1, dadurch gekennzeichnet, daß die auf der Einführungsseite des Sägedrahtes in den zu bearbeitenden Werkstoffblock angeordnete und eine Durchbiegung verhindernde Aussteifvorrichtung (40) aus einem senkrecht angeordneten Plättchen (42) besteht, an dessen Unterseite sich der Sägedraht abstützt, zwei spiegelbildlich zum Plättchen (42) angeordneten Seitenplättchen (43), einer lotrecht zum ersten Plättchen (42) auf einer an einem Winkelprofil (46) befestigten Trägerplatte (45) angeordneten Plättchenhalterung (44), und einer auf der Halterung des Lagerblockes (8A) befestigten Platte (47) besteht, auf welcher das Winkelprofil (46) montiert ist.

4. Drahtsäge nach Anspruch 3, dadurch gekennzeichnet, daß das Winkelprofil (46) höhenverstellbar und die Trägerplatte (45) in ihrem Längsausdehnungssinne derart verstellbar ist, daß einerseits der vom Plättchen (42) auf dem Sägedraht ausgeübte Druck eingestellt und andererseits die Plättchen (43) spiegelbildlich zu diesem Sägedraht angeordnet werden können.

5. Drahtsäge nach Anspruch 1, dadurch gekennzeichnet, daß die auf der Austrittsseite des Sägedrahtes aus dem zu bearbeitenden Werkstoffblock angeordnete und Durchbiegung verhindernde Aussteifvorrichtung (41) aus einem Motor (49), der auf einer fest mit dem eine Rolle (51) in Drehbewegung versetzenden Lagerblock (8A) verbundenen Halterung (50) befestigt ist, aus einem drehfest auf der Welle der Rolle (51) befestigten Zahnrad (52), aus zwei weiteren in Zahnrad (52) eingreifenden und jeweils eine Welle (54) bzw. (55) antreibenden Zahnrädern (53), aus einem durch Welle (54) in Drehbewegung versetzten Kegelradgetriebe (56), an welchem abtriebseitig ein Kranz (57) befestigt ist, an dessen Unterseite sich der Draht abstützt, und aus zwei endständig an Welle (55) befestigten Kränzen (58) besteht, zwischen welchen der Draht durchläuft.

6. Drahtsäge nach Anspruch 1, 3 und 5, dadurch gekennzeichnet, daß die Durchbiegung verhindernden Aussteifvorrichtungen (40) und (41) in Schutzgehäusen (84) eingebaut sind, welche je ein Waschrohr (85) enthalten und sich über dem Sägedraht derart kreuzende Klappen (86) tragen, damit drahteinlaufseitig im Steinblock durch diesen Draht mitgerissenes Wasser den Einlauf im besagten Block nicht auswaschen und drahtauslaufseitig aus dem Steinblock mitgerissenes Schleifmittel nicht ins Innere des Gehäuses eindringen kann.

7. Drahtsäge nach Anspruch 1, 3 und 5, dadurch gekennzeichnet, daß Plättchen (42) und (43) sowie Kränze (57) und (58) aus Wolfram bestehen.

8. Drahtsäge nach Anspruch 1, dadurch gekennzeichnet, daß die Drahtsäge Halterungs- und Führungsmittel für den Führungsarm (14) dazu beinhaltet, damit zeitliche Verschiebungen dieses Führungsarmes in der Führungsplatte (18) verhütet werden.

9. Drahtsäge nach Anspruch 8, dadurch gekennzeichnet, daß die Führungs- und Halterungsmittel für den Führungsarm (14) aus einem am Unterteil dieses Führungsarmes auf dessen Rückseite befestigten Wälzlager (59), und aus einer senkrechten, im Boden in Abstand hinter dem Führungsarm (14) befestigten Prellvorrichtung (60) gebildet sind, auf deren Stütze eine Führung (61) befestigt ist, in welcher das Wälzlager (59) verfahrbar gelagert ist.

10. Drahtsäge nach Anspruch 1, dadurch gekennzeichnet, daß unter der Zugstange (17) ein sich auf einer Schiene (53) abstützendes und darauf abwälzendes Rad (62) dafür angeordnet ist, damit einer unter Einwirkung des Schubes des Führungsarmes (14) möglichen Durchbiegung der Zugstange (17) entgegengewirkt wird.

11. Drahtsäge nach Anspruch 1, dadurch gekennzeichnet, daß im Boden parallel zur Zugstange (17) eine waagrechte Führung eingebracht ist und ein auf dem Flansch der Zugstange (17) befestigtes Wälzlager (65) sich auf dem Unterteil der Führung (64) abstützt und darauf dafür abrollt, damit ein Hochschwenken der Zugstange (17) bei deren Verfahren vermieden wird.

12. Drahtsäge nach Anspruch 1, dadurch gekennzeichnet, daß an mindestens einem der Pfosten (5) des ortsfesten Gestelles (1), in welchen Gleitführungsbahnen (7) ausgespart sind, zum Schutz besagter Gleitführungsbahnen vor Schleifmittelspritzern während des Sägevorganges eine Schutzvorrichtung angebaut ist.

13. Drahtsäge nach Anspruch 1, dadurch gekennzeichnet, daß die Schutzvorrichtung aus einer auf dem verfahrbaren Gestell (2) befestigten Haspel (66), aus einem Schutzband (67) von einer dem Pfosten (5) entsprechenden Breite, welches an seinem einen Endbereich am unteren Endstück des Pfostens (5) befestigt ist, und aus einer Feder (69) und einem Gegengewicht (68) gebildet ist.

Fig. 1

Fig. 2

Fig. 3

Fig. 4

Fig. 5

Fig.6

Fig.7

Fig. 8

Fig. 9

Fig. 10

Fig. 11

Fig.12